(19) Europäisches Patentamt
European Patent Office
Office européen des brevets

(11) Publication number : 0 393 403 B1

(12) # EUROPEAN PATENT SPECIFICATION

(45) Date of publication of patent specification : **14.07.93 Bulletin 93/28**

(51) Int. Cl.$^5$ : **B01J 33/00,** B01J 35/06, C02F 1/20, F16L 47/00

(21) Application number : **90106032.7**

(22) Date of filing : **29.03.90**

(54) **Insulating joint and packing containing a catalyst.**

(30) Priority : **20.04.89 JP 102211/89**
**09.05.89 JP 116512/89**
**09.05.89 JP 116520/89**
**05.12.89 JP 317072/89**

(43) Date of publication of application :
**24.10.90 Bulletin 90/43**

(45) Publication of the grant of the patent :
**14.07.93 Bulletin 93/28**

(84) Designated Contracting States :
**DE FR GB**

(56) References cited :
**EP-A- 0 246 533**
**FR-A- 1 582 308**
**FR-A- 2 048 165**
**US-A- 4 059 544**

(73) Proprietor : **MITSUBISHI DENKI KABUSHIKI KAISHA**
**2-3, Marunouchi 2-chome Chiyoda-ku**
**Tokyo (JP)**

(72) Inventor : **Matsunaga, Yoshihiro, Mitsubishi Denki K.K.**
**Zairyo Kenkyusho, 1-1, Tsukaguchihonmachi 8-chome**
**Amagasaki-shi, Hyogo-ken (JP)**
Inventor : **Matsuoka, Hiromasa, Mitsubishi Denki K.K.**
**Zairyo Kenkyusho, 1-1, Tsukaguchihonmachi 8-chome**
**Amagasaki-shi, Hyogo-ken (JP)**
Inventor : **Shimamoto, Kozo, Mitsubishi Denki K.K.**
**Zairyo Kenkyusho, 1-1, Tsukaguchihonmachi 8-chome**
**Amagasaki-shi, Hyogo-ken (JP)**

(74) Representative : **Liesegang, Roland, Dr.-Ing. et al**
**FORRESTER & BOEHMERT**
**Franz-Joseph-Strasse 38**
**W-8000 München 40 (DE)**

EP 0 393 403 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to an insulation joint for a water-supply O-O.

Oxygen dissolved in a feed material is liable to corrode each and every constituent part of water boilers, water-cooled electric generators, and so forth, hence the oxygen concentration should be limited at the stage of water-supply.

There have been two ways of removing oxygen from the feed material: the one is a method of mechanically removing oxygen by means of conventional heating, vacuum deoxidation, etc.; and the other is a method of chemically reducing oxygen with use of deoxidizing chemicals. The latter method is to adjust the pH value and alkalinity, or to maintain the residual concentration of the deoxidizer at a certain definite value or above. Since a high pressure boiler is particularly remarkable in its corrosiveness with the dissolved oxygen, use has been made of both deaerator and deoxidizer.

It is the well known fact that, even under the conditions of a normal temperature and a normal pressure, oxygen molecules combine with hydrogen molecules to form water under the catalytic action of platinum or palladium.

$$2H_2 + O_2 \xrightarrow{\text{Pt or Pd}} 2H_2O \qquad \text{(a)}$$

In recent years, there has been developed, in West Germany, a catalytic resin (OC 1045) produced by attaching palladium on the surface of an ion-exchange resin (above all, a polystyrene type strong basic anionic ion-exchange resin). It has been found out that this catalytic resin posesses its excellent deoxidizing effect under coexistence of hydrogen.

From US-A-4,059,544 a powdery or granular catalyst composition containing platinum or palladium as active material is known, which can be supported by a microporous polymer protective sheath permitting access of reactants to the active material.

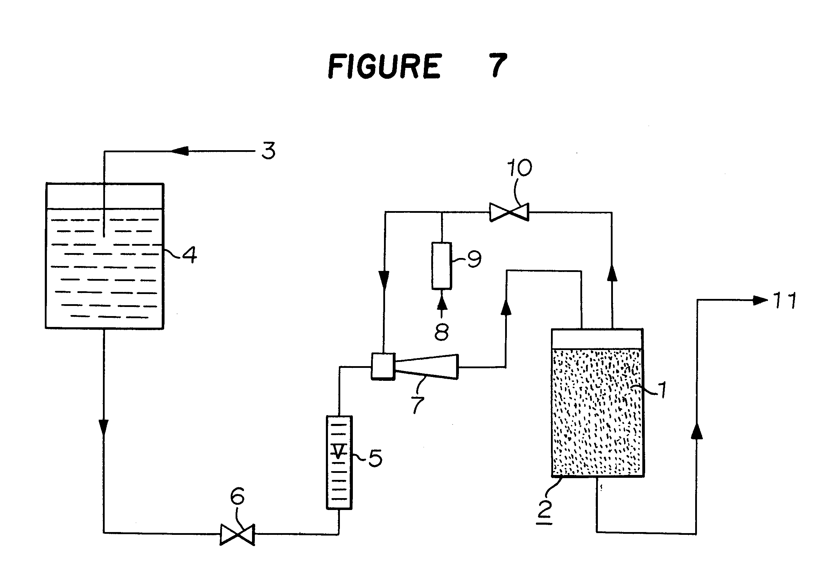

Figure 7 of the accompanying drawing is a system diagram for water-treatment of a dissolved oxygen removing device, in which a carrier to carry thereon the above-mentioned platinum or palladium catalyst is filled in a charging column, into and through which water is caused to flow to remove oxygen dissolved therein (vide: for example, a periodical "Kagaku Kogyo [Chemical Industry]", July, 1985). In this system diagram, a reference numeral 1 designates a catalyst body which carries thereon platinum or palladium; a reference numeral 2 represents a catalyst-charging column; a numeral 3 refers to a port for pouring raw water into the charging column; a reference numeral 4 denotes a storage tank for storing therein the raw water as poured from the raw water pouring port 3; a numeral 5 refers to a flow meter for measuring the pouring quantity of the raw water, a reference numeral 6 designates a control valve for regulating the pouring quantity of the raw water; and a reference numeral 7 denotes a jet aspirator, by the suction force of which hydrogen gas to be introduced from a hydrogen feeding port 8 and a gas existing on the upper part of the charging column 2 are mixed together and dispersed in pure water to be dissolved therein. A reference numeral 9 designates a hydrogen gas pouring quantity regulator; a numeral 10 refers to a control valve for adjusting a suction quantity of the gas in the upper part of the charging column 2 by the jet aspirator 5; and a reference numeral 11 denotes an outlet port of the treated water, from which oxygen has been removed. In the system diagram of figure 7, the arrow marks on and along the solid lines indicate the flowing directions of water or gas.

The conventional dissolved-oxygen-removing systems are so constructed that the solvent in the catalyst charging column 2 is in direct contact with water, whereby both hydrogen to be dissolved in water and oxygen already dissolved in water are combined into water by the above-mentioned reaction formula (a) to reduce the concentration of dissolved oxygen.

In various electric apparatuses and appliances of a type cooled with water such as, for example, water-cooled electric generator, the conductor for the stator winding is directly cooled with water, while hydrogen gas is circulated within the apparatus so as to cool each and every heat-generating part. In this case, an insulating joint is provided on the water-cooled piping system, for which insulating hose is utilized. This insulating hose is required to have insulating resistance, voltage withstand, mechanical strength, flexibility, water-tightness, resistance to heat-deterioration, and resistance to corrosion. These physical requirements on the insulating hose are described in "Mitsubishi Electric Technical Report, Vol. 43, No. 4 (1969), pp 543 ~ 545 (Stator Winding and Insulating Hose for Water-Cooled Electric Generator)".

As the insulating hose for the insulating joint which satisfies the above-mentioned required properties, there may be used a hose made of organic materials such as tetrafluoroethylene, and others.

Figure 1 of the accompanying drawing illustrates a conventional insulating joint for water-supply pipeline. In the drawing, a reference numeral 21 designates the insulating hose made of a material such as tetrafluoroethylene, having sufficient flexibility, high mechanical strength, and good insulating property, and a numeral

22 refers to a metal fitting for the joint, which is coupled on both ends of the insulating hose 21 to be connected with the piping system, and which is made of a corrosion-resistant metal such as stainless steel, etc. This joint metal fitting 22 fixes the end of the insulating hose 21 by calking at its caulking portion 23.

The insulating hose 21 made of organic material is gas-permeable. Of various organic materials, tetrafluoroethylene (Teflon) has particularly high permeability to gas such as oxygen, hydrogen, etc.

In the water-supply piping system including the above-mentioned conventional insulating joint, the concentration of oxygen dissolved in water at the downstream side of the insulating joint indicated a high value, even if the concentration of oxygen dissolved in supply water or circulating water is decreased. The reason for this is due to the fact that an oxygen partial pressure of the air as an impurity in hydrogen gas from the outer peripheral gas phase of the insulating hose 21 (for example, in the case of the electric generator, wherein hydrogen gas is caused to circulate) is higher than an oxygen partial pressure which takes a balance with the concentration of oxygen dissolved in water flowing in and through the insulating hose 21. That is to say, a difference between the oxygen partial pressure of the gas phase and the oxygen partial pressure which takes a balance with the dissolved oxygen in water exerts a driving force, which causes oxygen to permeate through the insulating hose 21 and to be dissolved in water inside the insulating hose.

In the conventional insulating joint of the construction shown in Figures 1(a), 1(b) and 1(c), the insulating hose 21 has its size of 3 cm in outer diameter, 50 cm in length, and 0.4 cm in wall thickness. Using this insulating hose, water containing therein dissolved oxygen of 20 ppb at the oxygen partial pressure of $10^3$ Pa(0.01 atm.) in the external gas phase of the insulating hose 21 was caused to pass in and through the insulating hose 21 at a flow rate of 1.5 m/sec., and then the dissolved oxygen in the water was measured.

The dissolved oxygen concentration in the water, after its passage through the insulating hose, increased to 200 ppb. This rise in the dissolved oxygen concentration is due to the permeation of oxygen in the cross-sectional direction of the insulating hose 21 as well as the permeation of oxygen from the contact surface between the insulating hose 21 and the caulking portion 23.

In the above-mentioned conventional water-cooled electric apparatuses and appliances, use is made of a packing for the pipe flange in the cooling water piping system, etc. Such conventional packing for the pipe flange in the water-supply pipe line was of a construction as shown in Figures 2 and 3 of the accompanying drawing, which show respectively the side elevational view and the front view of the flange coupling and the packing of the piping. In the drawing, a reference numeral 31 designates the water-supply pipe lines, in and through which cooling water, for example, is caused to pass. A reference numeral 32 denotes a pipe flange welded to the pipe 31, both pipe flanges 32, 32 being tightened together by bolts 34 and nuts 35 through a medium of a packing 33, thereby forming a water-tight connection.

For the packing 33, there may be used various organic materials such as Teflon (a tradename of tetrafluoroethylene), asbesto, and so forth.

While the above-mentioned packing 33 sufficiently prevents leakage of water passing in and through the pipe, it has permeability to gas. In case the gas phase outside the pipe is hydrogen, impurity air mixed in the gas phase contains oxygen. When the oxygen partial pressure at the side of the gas phase is higher than the oxygen partial pressure which takes a balance with the dissolved oxygen concentration of water flowing in the pipe, oxygen in the gas phase permeates through the packing 33 due to difference in the partial pressures, and is dissolved into water inside the pipe. When the concentration of this dissolved oxygen becomes higher, it attacks the metal material constituting the piping system. In this case, hydrogen also passes through the packing 33 and dissolved in water, but it does not corrode the metal material.

The catalyst body for removing dissolved oxygen provided in the dissolved oxygen removing apparatus according to the first-mentioned example of the conventional technique is of such a construction as mentioned in the foregoing that the catalyst is in direct contact with water. As the consequence of this, if and when raw water contains therein copper ions, copper oxide particles, etc. derived from, for example, water-cooling tube of the water-cooled electric generator, the surface of the catalyst is covered with metallic copper to bring about a problem of decrease in the catalytic function, due to the reactions as expressed by the following formulas (b) to (e):

$$Cu_2O + H_2 \rightarrow 2Cu + H_2O \quad (b)$$

$$CuO + H_2 \rightarrow Cu + H_2O \quad (c)$$

$$Cu^+ + 2e^- \rightarrow Cu \quad (d)$$

$$Cu^+ + e^- \rightarrow Cu \quad (e)$$

Further, in the insulating joint of the water-supply piping system as described in the second example of the conventional technique, gases such as oxygen, hydrogen, etc. from the side of the external gas phase permeate through the insulating hose 21 and are dissolved into the water inside the insulating hose. Of these permeated gases, oxygen accelerates corrosion of the metal material constituting the piping system.

Furthermore, in the packing for the pipe flange in the water-supply piping system as described in the

above-mentioned third example of the conventional technique, oxygen from the gas phase outside the piping system permeates through the pipe and is dissolved into the water inside the pipe to bring about the problem of corroding the metal material constituting the piping system.

The present invention aims at solving the described various problems inherent in the conventional techniques and at removing oxygen effectively for inhibiting corrosion of metal parts used in a water-supply piping system.

An insulating joint for the water-supply piping system according to the present invention comprises an insulating hose comprising an organic material having high flexibility, high mechanical strength, good insulating property, water-repellent property and permeability to hydrogen, oxygen, and water vapor; joint metal fittings, which are connected at both ends of the insulating hose; and a in very fine particulate catalyst dispersed in the material constituting the insulating hose, without impairing its insulating property, which catalyst produces water by reaction between oxygen and hydrogen passing through the insulating hose from an external gas phase.

Furthermore, a packing for a pipe flange in a water-supply piping system according to the present invention comprises that the packing comprises organic material having water-repellent property and permeability to hydrogen, oxygen and water-vapor in gaseous state; and that a very fine particulate catalyst is dispersed in the packing material, which catalyst produces water by reaction of hydrogen and oxygen.

With the insulating joint for the water-supply piping system according to the present invention, when oxygen from an external gas phase is permeating through the insulating hose, it comes into contact with the very fine particulate catalyst along with hydrogen which is also permeating through the insulating hose together with oxygen to bring about a reaction between them to produce water which forms part of the water inside the hose, thereby preventing the metal material constituting the piping system from corrosion.

With the packing for the pipe flange of the water-supply piping system according to the present invention, while both hydrogen and oxygen from the gas phase outside the piping system are permeating through the packing, they come into contact with the particulate catalyst and react to produce water which forms part of the water inside the tube, thereby inhibiting corrosion of the metal material constituting the piping system.

In the following, various ways of carrying out the present invention will be described in detail with reference to the accompanying drawings illustrating specific embodiments thereof, in which:-

Figure 1(a) is a front view of the insulating joint of the conventional water-supply piping system;

Figures 1(b) and 1(c) are respectively a cross-sectional view and a longitudinal cross-sectional view of the insulating coupling, taken along the lines IIb-IIb and IIc-IIc in Figure 1(a).

Figure 2 is a side elevational view of a pipe flange joint showing the packing for the pipe flange of the conventional water-supply piping system; and

Figure 3 is a front view of the packing shown in Figure 2.

Figure 4(a) is a front view of one embodiment of an insulating joint for the water-supply piping system representing an application of the present invention;

Figures 4(b) and 4(c) are respectively a cross-sectional view and a longitudinal cross-sectional view of the insulating coupling, taken along the lines Ib-Ib and Ic-Ic in Figure 4(a).

Figure 5 is a side elevational view of a pipe flange joint showing the packing for the pipe flange of the water-supply piping system according to another application of the present invention;

Figure 6 is a front view of the packing shown in Figure 5;

Figure 7 is a water-treatment system diagram of the dissolved oxygen-removing apparatus using a conventional catalyst body.

Figure 4 illustrates one embodiment of the insulating joint of the water-supply piping system according to the present invention. In the drawing, a reference numeral 211 designates an insulating hose made of an organic material such as, for example, tetrafluoroethylene, etc., having high flexibility, high mechanical strength, good insulating property, permeability to, and water-repellent property against, hydrogen, oxygen, and water vapor in gaseous state. This insulating hose 211 has a very fine particulate catalyst 212 (such as platinum, palladium, and others) dispersed uniformly in the neighborhood of its inner peripheral surface so as not to impair its insulating property.

The insulating hose 211, at each end thereof, has a joint metal fitting 22 fixed by caulking at its caulking portion 23. This joint metal fitting 22 made of stainless steel, etc. is further connected with the water-supply piping system (not shown in the drawing).

In the above-described insulating joint, the insulating hose 211 has the very fine particulate catalyst 212 (such as platinum, palladium, etc.) dispersed on its route, through which permeate hydrogen and a very small quantity of oxygen contained therein from an external gas phase. Both oxygen and hydrogen passing through the catalyst on the insulating hose are reacted together to produce water, thereby reducing the quantity of oxygen to penetrate into the water in the hose 211. This reaction will be shown in the following reaction formula.

$$2H_2 + O_2 \xrightarrow{\text{Pt or Pd}} 2H_2O$$

Since the produced water is in the molecular state, it can pass through the insulating hose 211 to enter into water inside the hose.

In the above-described embodiment of the present invention, use is made of platinum or palladium as the catalyst, although other catalysts such as nickel, iron, etc. may also be employed for the purpose.

The manner of dispersing the particulate catalyst 212 for its inclusion into the insulating hose 211 may be done in various ways such as dispersing it on the entire surface of the insulating hose, while taking into consideration various characteristics required of the insulating hose, such as insulating resistance, voltage withstand, and others; or dispersing it partially on the hose.

Figures 5 and 6 are respectively a side elevational view of a flanged joint part of a pipeline, and a front view of a packing, as one application of the present invention to the pipe flange packing for the water-supply piping system, wherein the reference numerals 31, 32, 39 and 35 are identical with those of the conventional apparatus as shown in Figures 2 and 3. In the drawings, a reference numeral 311 designates the packing for the pipe flange interposed and held between a couple of pipe flanges 32, 32. The packing is made of an organic material such as Teflon (tetrafluoroethylene) and asbesto having permeability to, and water-repellent property against, hydrogen, oxygen and water-vapor in gaseous state, onto which very fine particulate catalyst 312 is dispersed.

This catalyst 312 functions to cause hydrogen and oxygen to react to produce water, and consists of platinum, palladium, and so forth

In this flanged joint part of the pipeline for the water-supply piping system using the above-mentioned packing 311 for the pipe flange, oxygen and hydrogen from an external gas phase react each other on the surface of the very fine particulate catalyst 312, in the course of their permeating through the packing 311, to produce water, as shown by the following reaction formula.

$$2H_2 + O_2 \xrightarrow{\text{Pt or Pd}} 2H_2O$$

Since the thus produced water is in the molecular state, it is able to pass through the packing 311 and enter into the water inside the water-supply pipeline, without impairing the packing 311. In this way, oxygen to be dissolved into water can be inhibited.

By the way, in the above-described embodiment of the packing for the pipe flange in the water-supply piping system according to the present invention, the packing 311 is in the form of a sheet. It should, however, be noted that any other shapes may be appropriately adopted, such as O-ring, angled ring, etc., depending on necessity.

In the above-described embodiment of the present invention, use is made of platinum or palladium as the catalyst 312, although other catalysts such as nickel, iron, etc. may also be employed for the purpose.

## Claims

1. An insulating joint for a water-supply piping system comprising :
   - an insulating hose (211) comprising an organic material having high flexibility, high mechanical strength, good insulating property, water repellent-property and permeability to hydrogen, oxygen, and water vapour in gaseous state
   - joint metal fittings (22), which are connected at both ends of the insulating hose (211)

   **characterised in that**

   a very fine particulate catalyst (212) is dispersed in the material constituting the insulating hose, without impairing its insulating property, which catalyst produces water by reaction between oxygen and hydrogen passing through the insulating hose (211) form an external gas phase.

2. A packing (311) for a pipe flange in a water-supply piping system comprising an organic material having water repellent-property and permeability to hydrogen, oxygen, and water vapour in gaseous state

   **characterised in that**

   a very fine particulate catalyst (312) is dispersed in the packing material, which catalyst produces water by reaction between oxygen and hydrogen.

## Patentansprüche

1. Isolierende Verbindung für ein Wasserversorgungs-Rohrleitungssystem mit:
   - einem isolierenden Schlauch (211) enthaltend organisches Material hoher Flexibilität, hoher mechanischer Festigkeit, guter Isoliereigenschaften, Wasserabweiseeigenschaften und Durchlässigkeit für Wasserstoff, Sauerstoff und Wasserdampf in gasförmigem Zustand,
   - metallene Verbinder-Fittings (22), die an die beiden Enden des isolierenden Schlauches (211) angeschlossen sind,

   **dadurch gekennzeichnet,** daß
   ein Katalysator (212) aus sehr feinen Teilchen in dem den isolierenden Schlauch bildenden Material dispergiert ist, ohne seine Isoliereigenschaften zu verschlechtern, wobei der Katalysator Wasser durch Reaktion zwischen Sauerstoff und Wasserstoff erzeugt, welche Gase den isolierenden Schlauch (211) aus einer externen Gasphase passieren.

2. Dichtpackung (311) für einen Rohrleitungsflansch in einem Wasserversorgungs-Rohrleitungssystem enthaltend ein organisches Material mit Wasserabweisungseigenschaften und Durchlässigkeit für Wasserstoff, Sauerstoff und Wasserdampf in gasförmigem Zustand,
   **dadurch gekennzeichnet,**
   daß ein Katalysator (312) mit sehr feinen Partikeln in dem Dichtpackungsmaterial dispergiert ist, wobei der Katalysator durch Reaktion zwischen Sauerstoff und Wasserstoff Wasser erzeugt.

## Revendications

1. Raccord isolant pour système de canalisation d'alimentation en eau, comportant:
   - un tuyau flexible isolant (211) comprenant une matière organique possédant une grande flexibilité, une grande résistance mécanique, un pouvoir isolant élevé, des propriétés hydrofuges et une perméabilité à l'hydrogène, à l'oxygène et à la vapeur d'eau à l'état gazeux
   - des éléments métalliques (22) de raccord, qui sont reliés au niveau des deux extrémités du tuyau flexible isolant (211),

   caractérisé en ce que:
   un catalyseur (212) sous la forme de très fines particules est dispersé dans la matière constitutive du tuyau flexible isolant, sans altérer sa propriété isolante, catalyseur qui produit de l'eau par une réaction entre de l'oxygène et de l'hydrogène passant à travers le tuyau flexible isolant (211) à partir d'une phase de gaz externe.

2. Garniture (311) pour une bride de tuyau dans un système de canalisation d'alimentation en eau, comprenant une matière organique ayant des propriétés hydrofuges et une perméabilité à l'hydrogène, à l'oxygène et à la vapeur d'eau à l'état gazeux,
   caractérisée en ce qu'un catalyseur (312) sous la forme de très fines particules est dispersé dans la matière de la garniture, catalyseur qui produit de l'eau par une réaction entre de l'oxygène et de l'hydrogène.

FIGURE 1

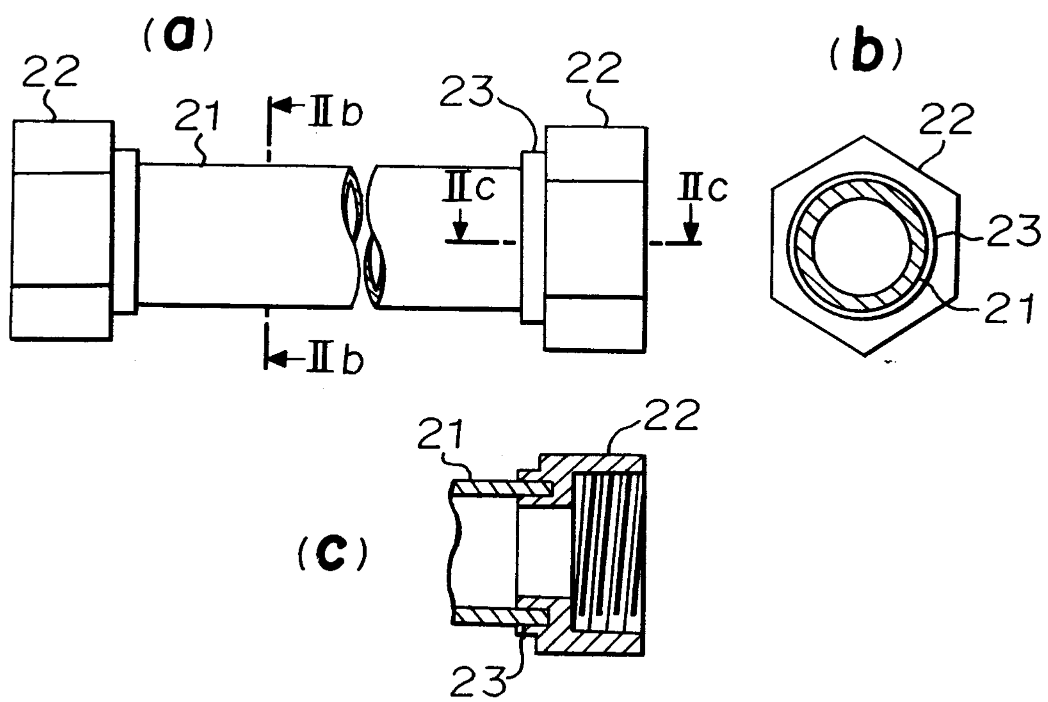


FIGURE 2

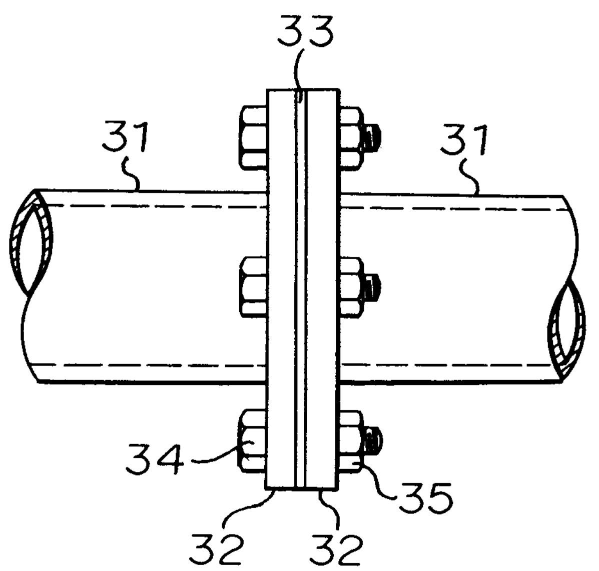


FIGURE 3

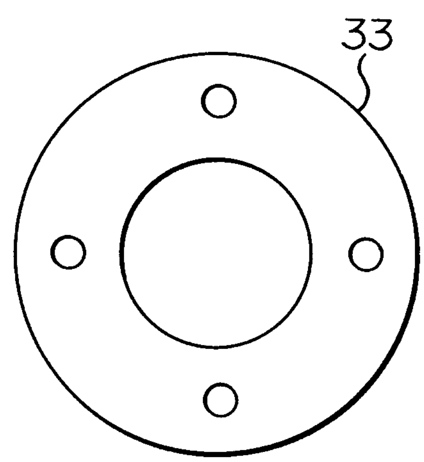

FIGURE 4

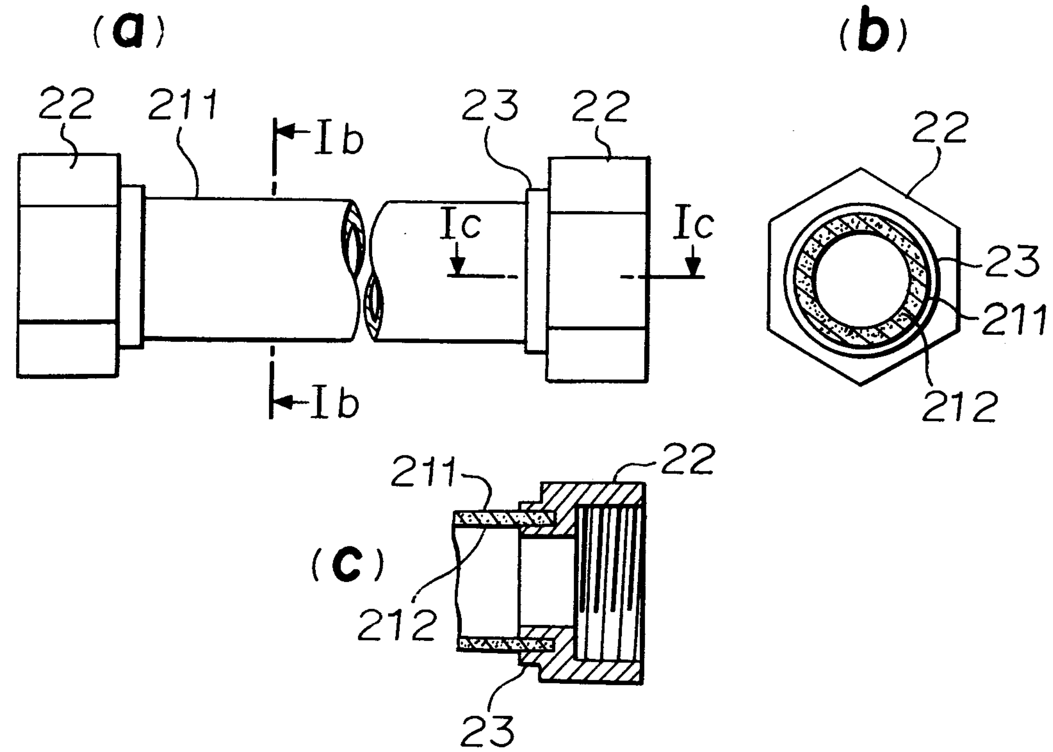


FIGURE 5

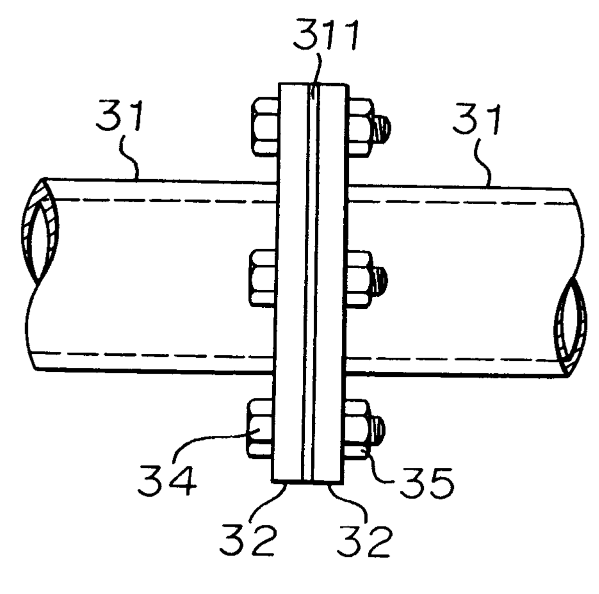


FIGURE 6

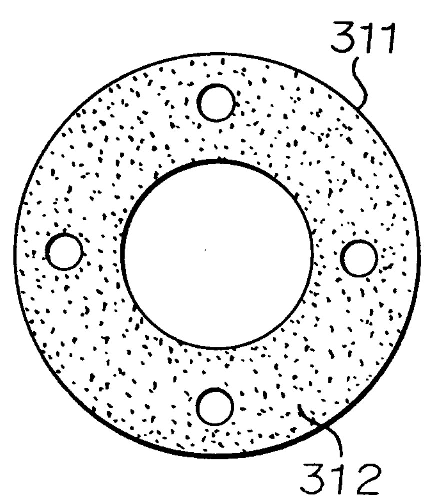

FIGURE 7